# EUROPEAN PATENT APPLICATION

(11) **EP 2 047 945 A1**
(43) Date of publication of application: **15.04.2009**
(21) Application number: 08253251.6
(22) Date of filing: 07.10.2008
(51) Int. Cl.: B23P 15/00, F01D 5/34, B23K 20/12

(54) **Method of manufacturing a turbine rotor and corresponding turbine rotor**

(30) Priority: 09.10.2007 US 973560
(71) Applicant: Hamilton Sundstrand Corporation, Windsor Locks, CT 06096-1010 (US)
(72) Inventor: Izadi, Said, San Diego, CA 92131 (US); Shihming, Jan, Solana Beach, CA 92075 (US)
(74) Representative: Tomlinson, Kerry John

(57) **Abstract**

A method of making a turbine rotor (50) comprising casting a metal material blade ring (10), so as to have therein blades (11) arrayed about the outer periphery of a ring and an .initial interior ring passageway (13) at an inner periphery of the ring formed by a ring interior wall (17) thereabout that extends between concentric initial passageway openings (15, 16) of differing diameters at opposite ends of this passageway, providing a metal material hub structure (30), having therein a disk (32) part thereof with a disk side (34) configured such that at least a portion of the disk side is positionable against a portion of the ring interior wall through one of the initial passageway openings so as to be assembleable into an assembled structure for a turbine rotor, mounting one of the blade ring and the hub structure in a holder to present same for joining to the other, mounting the remaining one of the blade ring and the hub structure in a rotation holder for being rotated by a rotatable portion of that rotation holder to present same for joining to the other, and pressing at least the portion of the ring interior wall (17) of the blade ring and the portion of the disk side (34) of the hub structure disk part together with a selected force while the rotatable portion of the rotation holder is rotating for a sufficient time to friction weld together the ring interior wall and the disk side to thereby form the assembled structure.

## Description

### BACKGROUND

The present invention relates to gas turbine engines and, more particularly, to turbine rotors used therein.

Gas turbine engines are commonly used for aircraft propulsion and for powering various devices located in aircraft or in ground vehicles or a variety of ground installations (by generating electrical power or compressed air). Such engines in essence have, beginning from the engine atmospheric air inlet, a compressor arrangement having rotatable compressor rotors therein followed by a combustor arrangement for receiving the generated compressed air to add fuel thereto and ignite same. The remaining air and combustions products are hot gases, characterized by high temperatures and pressures, which exit the engine through a turbine arrangement having rotatable turbine rotors therein and thereafter through the exit nozzle to the atmosphere. In doing so, the turbine rotors are forced to rotate and, because of being mechanically coupled to the compressor rotors, these latter rotors are also forced to rotate as are any devices that are also mechanically coupled to the turbine rotors. In aircraft engine applications, the escaping hot gases also provide thrust for propulsion.

The turbine, in addition to rotors with a sequence of radially extending shaped blades about the periphery thereof, has corresponding sequences of circularly arrayed vanes with each such sequence provided in a stationary vane structure located between successive rotors. These vanes stabilize and direct the flows of hot gases from one rotor to the next in a manner seeking to optimize the work extracted from those gases in rotating the turbine rotors. Higher temperatures and pressures in the hot gases passing through the vanes and rotor blades permits extracting greater energy therefrom in turning the rotor blades to thereby increase engine efficiency.

However, operating at such increased temperatures and pressures requires materials in structures in the turbine subjected to such hotter gases to be able to operate at such temperatures and pressures at the operational rotation speeds encountered. This includes the rotor blades maintaining their mechanical resistance to the stresses thereon due to such hot, pressurized impinging gases by resisting distortion, stretching, elongation or other forms of metal creep, and resisting wear and corrosion due to those gases or other substances entering the engine inlet airflow. One class of materials and manufacturing technique found suited for such blades has been forming them arrayed about the outer periphery of a ring in a unitary structure made of cast, sometimes directionally solidified, nickel-base superalloys. These bladed rings are joined at the interior of the ring in the ring opening to a rotor core disk, or hub, suited for being mounted on a rotatable shaft or tube and are typically formed of forged high strength superalloys, which may again be nickel-base superalloys. The material used must also have good low and high cycle fatigue properties, good corrosion resistance and good ductility at room and elevated temperatures. This joining of the bladed ring to a corresponding rotor core disk is typically provided through diffusion bonding of the one to the other in a vacuum furnace for diffusion bonding.

### SUMMARY

The present invention provides a method of making a turbine rotor comprising casting a metal material blade ring so as to have blades arrayed about the outer periphery of a ring and an initial interior ring passageway at an inner periphery of the ring formed by a ring interior wall thereabout that extends between concentric initial passageway openings of differing diameters at opposite ends of this passageway, and providing a metal material hub structure having a disk part thereof with a disk side configured such that at least a portion of the disk side is positionable against a portion of the ring interior wall through one of the initial passageway openings so as to be assembleable into an assembled structure for a turbine rotor through mounting one of the blade ring and the hub structure in a holder to present same for joining to the other and also mounting the remaining one of the blade ring and the hub structure in a rotation holder for being rotated by a rotatable portion of that rotation holder to present same for joining to the other. These mountings are followed by pressing at least the portion of the ring interior wall of the blade ring and the portion of the disk side of the hub structure disk part together with a selected force while the rotatable portion of the rotation holder is rotating for a sufficient time to friction weld together the ring interior wall and the disk side to thereby form the assembled structure.

### BRIEF DESCRIPTION OF THE DRAWINGS

Figure 1A shows a cross section side view of individual members to be joined together in providing a turbine rotor,
Figure 1B shows a cross section side view of the members in Figure 1A as subsequently joined together, and
Figure 2 shows a cross section side view of a completed turbine rotor following suitable processing of the joined members of Figure 1B.

### DETAILED DESCRIPTION

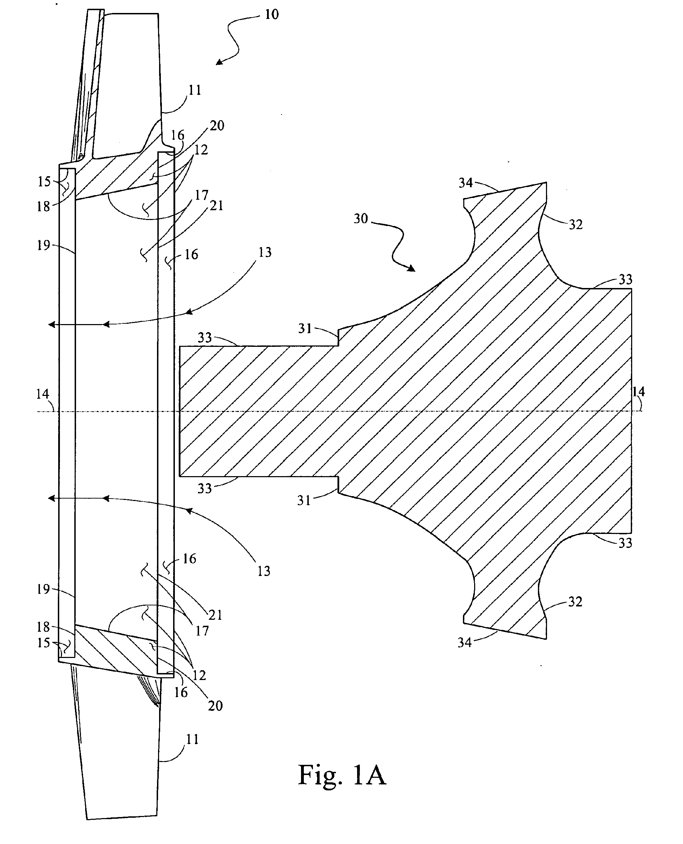

Figure 1A shows a cross section side view of an example of a bladed ring, 10, with blades, 11, arrayed about the outer periphery of a ring, 12, typically formed in a cast, perhaps directionally solidified, unitary structure made of a suitable material like a nickel-base superalloy such as commercially available INCO 792 from INCO Limited. Bladed ring 10 is formed around an initial interior passageway, 13, extending in three sections through ring 12 along an axis of symmetry thereof, 14. Initial interior passageway 13 has a smaller recessed side opening section with a circular wall thereabout, 15, at one end thereof and a larger recessed side opening section with a circular wall thereabout, 16, thereabout at the other end thereof.

Between these two side openings therein, initial interior passageway 13 has a central section with a circular wall, 17, providing an interior end surface, 18, at the periphery of the smaller one of the two recessed passageway side opening sections, the one having circular wall 15 thereabout. End surface 18 is formed outside of a circular opening, 19, that is provided there as access to the central section of initial interior passageway 13 from that smaller recessed side opening section of that passageway. Opening 19 to the central section has a diameter less than that of circular wall 15.

From there, central section circular wall 17, in bounding the central section of initial interior passageway 13, has a diameter that increases, shown linearly increasing, along axis 14 until reaching the larger one of the two recessed side opening sections, the one having circular wall 16 thereabout. There, central section circular wall 17 again provides an interior end surface, 20, outside of a further circular opening, 21, that is provided there for access to the central section of initial interior passageway 13 from this larger recessed side opening section of that passageway. That is, central section circular wall 17 extends along axis 14, and concentrically thereabout, with a changing diameter between the two circular openings 19 and 21 thereto, also provided concentrically about that axis. Opening 21 has a diameter greater than that of opening 19 but less than that of circular wall 16 to thereby provide end surface 20. Central section circular wall 17 is machined to have surface extents therein, i.e. line elements therein, parallel to axis 14 that project onto that axis at a desired angle, termed the ring boundary wall surface angle, and to have a desired total surface area.

Also shown in a cross section side view in Figure 1A is an example of a typically forged, or wrought, or possibly cast, rotor metal hub preform, 30, typically formed of a suitable material like a nickel-base superalloy such as commercially available INCO 718 from INCO Limited. The outer surface of hub preform 30 can be shaped to provide the needed surface shape features that are acceptable for use thereafter without too great a precision in the location or shape thereof, or both, through providing them during the forging or casting process used in providing preform 30. Such a shape feature is shown for example as a raised surface wall, 31, symmetrically provided about axis 14 that has been extended in Figure 1A from initial interior passageway 13 of bladed ring 10 through preform 30 as the axis of symmetry therefor also.

However, those surface shape features that must be provided with precision as to location or shape will typically have to be provided by machining, or, alternatively provided first as a started feature through forging or casting, and later adjusted by machining, to reach a final acceptable shape. One such feature requiring a precision shape is a disk portion, 32, which is that portion of hub preform 30 having the largest lateral extent with respect to axis 14 in being provided about a shaft coupling portion, 33, of hub preform 30. There, a disk side surface, 34, must be machined to have surface extents therein, i.e. line elements therein, parallel to axis 14 that project onto that axis at a desired angle, termed the disk side surface angle. The angle that is desired for the disk side surface angle is that angle that substantially matches the ring boundary wall surface angle of central section circular wall 17 about initial interior passageway 13 in bladed ring 10 selected above. Also, the total surface area of disk side surface 34 is desired to substantially match that of central section circular wall 17.

Thus provided and prepared, bladed ring 10 and hub preform 30 are joined together, after positioning ring boundary wall surface angle of central section circular wall 17 against disk side surface 34, and friction welded to one another to form a bond over the areas of those two surfaces, which provides the resulting bond area. Such welding is a joining process that allows avoiding use of an expensive vacuum furnace, as previously used in diffusion bonding together these parts, and the relatively long corresponding heating and cooling times although preheating of the parts can be used to enhance the welding process such as through controlling the weld cooling rate.

This friction welding is typically accomplished by holding one of bladed ring 10 and preform hub 30 stationary with the other of them being rotated while applying a lineal force in the direction of axis 14, about which both are concentrically positioned, so as to force them against one another where they meet at central section circular wall 17 and disk side surface 34. Again, typically, bladed ring 10 is positioned in a static holder that holds it stationary during the friction welding process with axis 14 extending from initial interior passageway 13 thereof through hub preform 30 coinciding with the rotation axis of a rotatable spindle on which hub preform 30 is mounted in a rotation holder. The two holders allow bringing stationary bladed ring 10 and rotatable hub preform 30 against one another at central section circular wall 17 and disk side surface 34 with a selected lineal pressing force, and rotating hub preform 30 in that arrangement at least initially at a selected rate of rotation. The lineal pressing force, and the rotation rate, selected depend on the size chosen for the bond area, the nature of the material chosen in forming each of bladed ring 10 and hub 30, and the value chosen for both the ring boundary wall surface angle and the disk side surface angle.

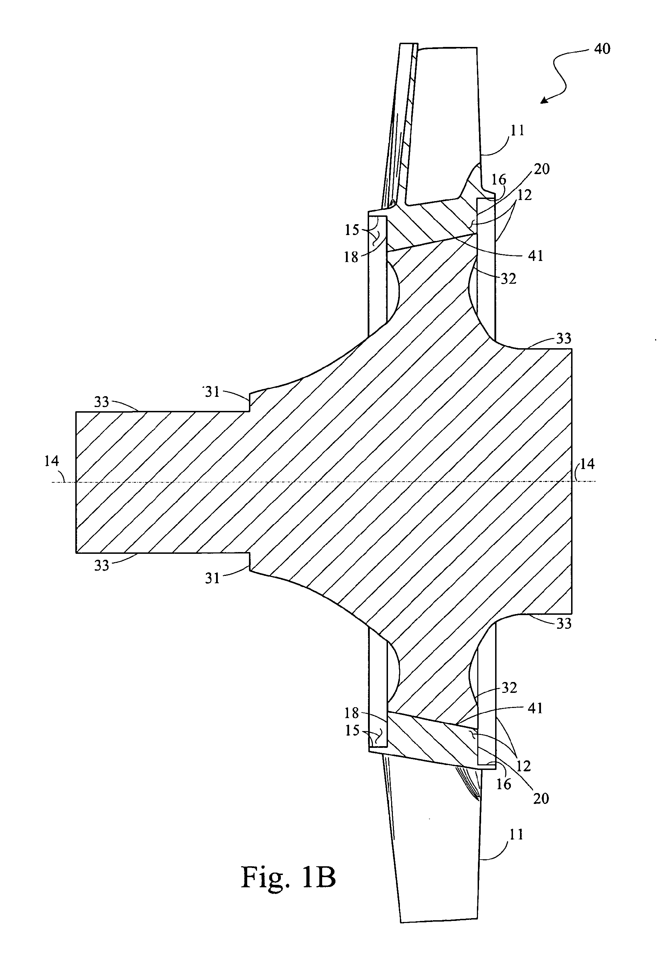

An attractive form of friction welding for this purpose is inertia welding as a stored kinetic energy system. This welding process allows selecting the energy input going into forming the weld through spinning hub 30 up to a selected rate before forcing it against bladed ring 10 with a selected lineal force to thereby obtain a good quality welded joint. This process aids in getting repeatable results for each such welded joint made. The resulting heating from the frictional force between these two parts, after being brought together following the spinning of hub 30, leads to a plastic deformation at the interface between them and the formation of atomic bonds there to join these two parts together, all without melting the metals in central section circular wall 17 and disk side surface 34 at the welding interface occurring where they are frictionally heated against one another. The result is an intermediate rotor assembly, 40, shown in Figure 1B with a welding bond, 41, over the bonding area at what were previously exposed surfaces, that is, central section circular wall 17 and disk side surface 34 in Figure 1A .

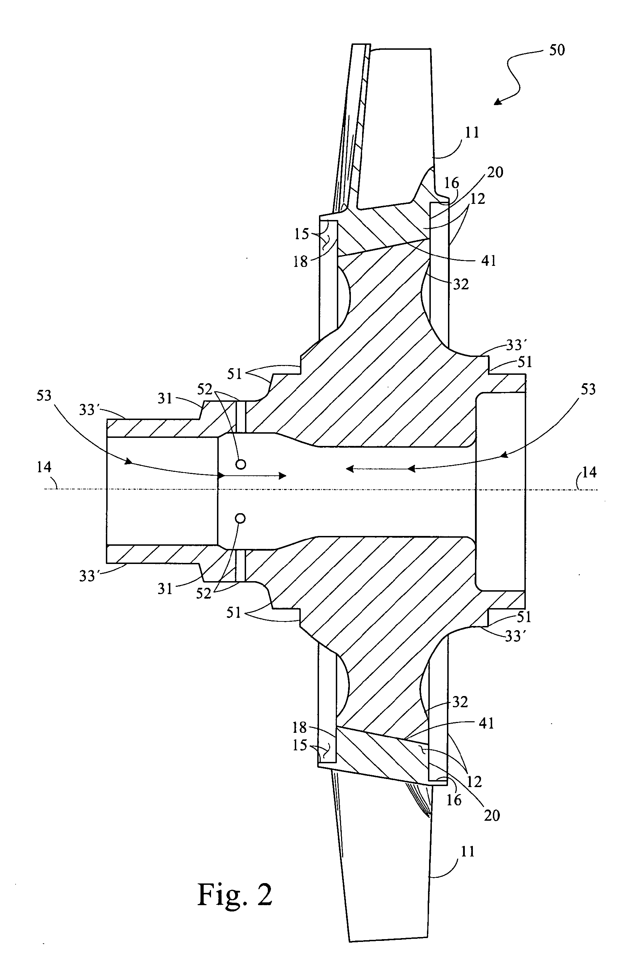

Intermediate rotor assembly 40 is thereafter subjected to various finishing processes including a substantial amount of machining to provide a finished rotor. Such a finished rotor, 50, is shown in Figure 2. There, shaft coupling portion 33 in Figures 1A and 1B has been redesignated 33' as machining has altered its external shape by adding further raised walls, 51, therein. Lubrication ports, 52, have been drilled therein to provide access to a shaft accommodation passageway, 53, bored through shaft coupling portion 33' in this example of a finished rotor.

Although the present invention has been described with reference to preferred embodiments, workers skilled in the art will recognize that changes may be made in form and detail without departing from the scope of the invention, which is defined by the claims and their equivalents.

## Claims

1. A method of making a turbine rotor (50) comprising
casting a metal material blade ring (10), so as to have therein blades (11) arrayed about the outer periphery of a ring and an initial interior ring passageway (13) at an inner periphery of the ring formed by a ring interior wall (17) thereabout that extends between concentric initial passageway openings (15, 16) of differing diameters at opposite ends of this passageway,
providing a metal material hub structure (30), having therein a disk (32) part thereof with a disk side (34) configured such that at least a portion of the disk side is positionable against a portion of the ring interior wall through one of the initial passageway openings so as to be assembleable into an assembled structure for a turbine rotor,
mounting one of the blade ring and the hub structure in a holder to present same for joining to the other,
mounting the remaining one of the blade ring and the hub structure in a rotation holder for being rotated by a rotatable portion of that rotation holder to present same for joining to the other, and
pressing at least the portion of the ring interior wall (17) of the blade ring and the portion of the disk side (34) of the hub structure disk part together with a selected force while the rotatable portion of the rotation holder is rotating for a sufficient time to friction weld together the ring interior wall and the disk side to thereby form the assembled structure.

2. The method of claim 1 wherein the rotatable portion of the rotation holder is spun up to a selected rate of rotation prior to pressing the portion of the ring interior wall (17) of the blade ring and the portion of the disk side (34) of the disk part of the hub structure together.

3. The method of claim 1 or 2 wherein the portion of the ring interior wall (17) and the portion of the disk side (34) are pressed together after having been previously prepared so as to be substantially in contact over the entire area of each after such pressing together.

4. The method of claim 1, 2 or 3 wherein the blade ring (10) is cast as a single crystal.

5. The method of claim 1, 2, 3 or 4 wherein the blade ring (10) is made of a nickel base superalloy.

6. The method of any preceding claim wherein the hub structure is provided as a preform (30) having the disk part (32) provided about a shaft coupling part (33) therein and the pressing of the portion of the ring interior wall (17) of the blade ring and the portion of the disk side (34) of the disk part of the hub structure together to form the assembled structure is followed by altering the shape of the hub preform in forming a turbine rotor (50) from the assembled structure with a finished hub.

7. The method of claim 6 wherein the hub preform (30) is formed of forged or cast metal.

8. The method of claim 6 or 7 wherein the hub preform (30) is made of a nickel base superalloy.

9. The method of claim 6, 7 or 8 wherein the altering of the shape of the hub preform (30) includes providing a passageway (53) through the shaft coupling part thereof substantially perpendicular to a plane extended through corresponding points in each of the blades (11).

10. A turbine rotor (50) formed of a cast metal material blade ring (10), having therein blades (11) arrayed about the outer periphery of a ring and an initial interior ring passageway (13) at an inner periphery of the ring formed by a ring interior wall (17) thereabout that extends between concentric initial passageway openings (15, 16) of differing diameters at opposite ends of this passageway, and a metal material hub structure (30), having therein a disk part (32) thereof with a disk side (34) configured such that at least a portion of a disk side is positioned against a portion of the ring interior wall (17) through one of the initial passageway openings and friction welded thereto.

11. The rotor of claim 10 wherein the blade ring (10) is cast as a single crystal.

12. The rotor of claim 10 or 11 wherein the blade ring (10) is made of a nickel base superalloy.

13. The rotor of claim 10, 11 or 12 wherein the hub structure (30) is formed of forged or cast metal.

14. The rotor of claim 10, 11, 12 or 13 wherein the hub structure (30) is made of a nickel base superalloy.

15. The rotor of any of claims 10 to 14 wherein the hub structure includes a passageway (53) through a shaft coupling part thereof about which the disk part is provided with the passageway extending substantially perpendicular to a plane extended through corresponding points in each of the blades (11).
